# EUROPEAN PATENT APPLICATION

(11) **EP 3 797 866 A1**
(43) Date of publication of application: **31.03.2021**
(21) Application number: 19808452.7
(22) Date of filing: 17.05.2019
(51) Int. Cl.: B01J 29/74, B01J 35/00, B01J 37/02, F01N 3/20, B01D 53/94

(54) **ZEOLITE HAVING IMPROVED HEAT RESISTANCE AND CATALYST COMPOSITE USING SAME**

(30) Priority: 21.05.2018 KR 20180057570; 04.04.2019 KR 20190039595
(71) Applicant: Heesung Catalysts Corporation, Siheung-si, Gyeonggi-do 15088 (KR)
(72) Inventor: KOMATEEDI, Narayana Rao, Siheung-Si Gyeonggi-do 15049 (KR); KIM, Eun-seok, Ansan-Si Gyeonggi-do 15502 (KR); KIM, Yong Sul, Siheung-Si Gyeonggi-do 15088 (KR)
(74) Representative: Latscha Schöllhorn Partner AG
(86) International application number: PCT/KR2019/005919
(87) International publication number: WO 2019/225909

(57) **Abstract**

Proposed is a reformed zeolite and a catalyst composite using the reformed zeolite which have improved heat resistance and are used in a selective catalytic reduction (SCR) catalyst using ammonia or urea as a reducing agent, in a filter-type selective catalytic reduction (SDPF) catalyst in which a filter is coated with the SCR catalyst, or in a lean nitrogen oxide diesel oxidation catalyst (NA-DOC). In the reformed zeolite and the catalyst composite, alumina components, which are a zeolite coating material, improve heat-resistance of the zeolite and promote catalytic efficiency in a high-temperature condition.

## Description

### Technical Field

The present disclosure relates to a reformed zeolite and a catalyst composite using the same which have improved heat-resistance and are used in a selective catalytic reduction (SCR) catalyst using ammonia or urea as a reducing agent, or in a filter-type SCR catalyst in which a filter is coated with the SCR catalyst, or in a lean nitrogen oxide diesel oxidation catalyst. The reformed zeolite according to the present disclosure is manufactured by coating or mixing zeolite with alumina sol, and a catalyst including the reformed zeolite according to the present disclosure may be improved at nitrogen oxide (NOₓ) lowering performance at a high-temperature region and may be improved at thermal durability even when being exposed to high-temperature exhaust gas discharged from an internal combustion engine, etc.

### Background Art

The removal of nitrogen oxide (NOₓ) from exhaust gas is particularly difficult in a combustion condition which uses more air than required for stoichiometric combustion, i.e., a combustion condition of an internal combustion engine operated in a lean condition.

As a proven technology for lowering NOₓ applied to a stationary source which is the lean condition, there is a selective catalytic reduction (SCR) using ammonia. In this technology, the NOₓ reacts with ammonia acting as a reducing agent, on the surface of the SCR catalyst and is lowered as it is reduced to nitrogen (N₂). Generally, vanadium-titanium oxide is applied as a selective catalytic reduction (SCR) catalyst that represents 90% or more decrease of nitrogen oxides in a range of 300 to 450°C, and ZSM5 and beta form zeolite and/or ion-exchanged transition metals such as Fe or Cu, zeolite catalysts such as Fe-beta, Cu-beta, Fe-ZSM5, and Cu-ZSM5 are developed and used for applications that require high thermal durability (600°C or more) and high active temperature range (350 to 550°C). However, the problem of heat-resistance still exists. Such a SCR may also be applied to a filter structure, and is referred to as a SCRoF (SCR on Filter) or an SDPF. The SCR is called filter-type SCR catalyst in the present disclosure. Meanwhile, recently, a catalyst article including a NOₓ adsorbing material in a diesel oxidation catalyst (DOC) has been developed and applied to improve a low-temperature activity, which is referred to as a NA-DOC, and is called a NOₓ adsorbing type diesel oxidation catalyst in the present disclosure. In the NOₓ adsorbing diesel oxidation catalyst or the filter-type selective catalytic reduction catalyst, it is required to provide a catalyst that has improved high-temperature activity, thermal durability against exposure to high-temperature exhaust gas generated from an internal combustion engine, and poisoning resistance against poisonous material such as sulfur, phosphorus, calcium, zinc, and an alkali metal.

### Disclosure

### Technical Problem

The present disclosure is completed by achieving a catalyst that has excellent heat-resistance and high-temperature activity by applying alumina sol to zeolite to manufacture a reformed zeolite and applying the reformed zeolite to NA-DOC, SCR or SDPF.

### Technical Solution

The present disclosure relates to a catalyst article. More particularly, the catalyst article may a nitrogen oxide adsorbing type diesel oxidation catalyst, a selective catalytic reduction catalyst, or a filter-type selective catalytic reduction catalyst, and may include zeolite placed in a carrier, and the zeolite may be coated with alumina sol.

According to an embodiment of the present disclosure, zeolite before reformation may be H-beta zeolite or CHA zeolite. The catalyst article according to the present disclosure may further include a platinum group component, and a NOₓ storing material, for example, barium, strontium, and magnesium, which are typically added in the NOₓ adsorbing type diesel oxidation catalyst. In addition, typical components, such as a conjugate, which are understood by those skilled in the art may be further included in the selective catalytic reduction catalyst or the filter-type selective catalytic reduction catalyst. The reformed zeolite according to the present disclosure may be placed on the inner wall of the carrier or the pores of the inner wall of the carrier.

According to another embodiment, the present disclosure may provide an exhaust gas treatment system including the catalyst article.

### Advantageous Effects

The stability of the reformed zeolite according to the present disclosure may be confirmed by an X-ray diffraction (XRD) and change in Brunauer Emmett Teller (BET) surface area. When the NA-DOC, SCR, or SDPF catalyst coated with reformed zeolite is applied to an exhaust system, adsorption rate or conversion rate of the nitrogen oxide (NOₓ) of high-temperature exhaust gas is increased due to improvement in the heat-resistance of zeolite. In addition, thermal durability against exposure to high-temperature exhaust gas and poisoning resistance, which remains active even when exposed to high concentration of sulfur and alkali metals, are improved.

There may be factors influencing the stability of the reformed zeolite, such as a physical barrier role of alumina which acts as a shell for the zeolite which is a core, and weakening of dealumination, but is not limited thereto.

### Description of Drawings

FIG. 1a shows a result of a transmission electron microscope (TEM) analysis of a fresh reformed zeolite and aged reformed zeolite, and FIG. 1b is a schematic view showing the change due to the aging;
FIG. 2 shows a result of a TEM analysis after manufacturing a reformed zeolite by mixing a gamma-alumina powder instead of alumina sol in a method of manufacturing the reformed zeolite by a resonant acoustic mixing (RAM) mixer and a ball milling process;
FIG. 3a illustrates X-ray diffraction (XRD) spectrums of a conventional BEA zeolite and a reformed BEA zeolite at 750 to 1200°C, and FIG. 3b illustrates XRD spectrums of a conventional SSZ13 zeolite and a reformed SSZ13 zeolite at 750 to 1200°C;
FIG. 4 illustrates XRD spectrums of a conventional BEA zeolite and a reformed BEA zeolite in a lab tube furnace (LTF) aging L/R process at 800 to 950°C;
FIG. 5 shows graphs illustrating a change in a Brunauer Emmett Teller (BET) surface area of a conventional zeolite and a reformed zeolite in an LTF aging L/R process at 800 to 950°C;
FIG. 6 is a graph showing NOₓ adsorption rates of NA-DOC catalyst articles including SSZ13 zeolite control group (Pd/CHA), gamma-alumina (g-Al₂O₃) control group, and reformed zeolite (ZASA @ NA-DOC) containing 30 weight % of alumina sol in the control group zeolite, when the NOₓ adsorption rates were measured under the condition with 850°C/25h hydro thermal aging (HTA), adsorption of NOₓ = 400 ppm at 100°C for 10 minutes, and desorption at 100 to 700°C;
FIG. 7 shows graphs illustrating ammonia-SCR performance efficiency after 850°C/25h HTA aging and 900°C/12h HTA aging for catalyst articles including SSZ13 zeolite control group (Ref-Cu/CHA), gamma-alumina (g-AL₂O₃) control group, and reformed zeolite (ZASA) containing 30 weight % of alumina sol in the control group zeolite; and
FIG. 8 is a graph showing ammonia-SCR performance efficiency after 900°C/12h HTA aging for catalyst articles in which catalysts including SSZ13 zeolite control group (Ref-NOₓ) and reformed zeolite (ZASA) containing 30 weight % of alumina sol in the control group zeolite are coated on DPF.

### Best Mode

The present disclosure relates to a reformed zeolite coated with alumina sol, a catalyst article in which the reformed zeolite is placed on a carrier, and an exhaust gas treatment system including the catalyst article.

Zeolite is a crystalline aluminosilicate material that typically has a uniform pore size of a diameter of about 3 to 10-angstrom, which is depending on the type thereof, and type and quantity of a cation included in the lattice thereof. The purpose of the zeolite, synthetic zeolite, and natural zeolite used to promote a specific reaction including a selective reduction of nitrogen oxide by ammonia acting as a reducing agent is well known to those skilled in the art. The objective of the present disclosure is to improve heat-resistance of zeolite by reforming the zeolite, especially by using alumina sol to manufacture the reformed zeolite. The term 'alumina sol' used herein may be interchangeably used with the term 'aluminum hydroxide', 'bayerite', or 'boehmite'. In fact, alumina sol is understood to be a substance containing several forms of aluminum hydroxide. In general, alumina sol may be manufactured to a powder form or a cake form as purposed. In the manufacturing process of alumina sol, alumina hydrate obtained by liquid-phase neutralization reaction of an acidic water-soluble aluminum salt such as aluminum chloride and aluminum nitrate with an alkaline substance such as ammonia hydroxide and carbonate is aged and washed to remove impurities, and is filtered, and then the desired alumina hydrate is obtained as a cake form or obtained as an alumina sol powder by heat treatment after drying.

H-beta zeolite, BEA zeolite, or CHA zeolite is exemplified and SSZ-13 among the CHA zeolite is exemplified in the present disclosure, but not limited thereto. Furthermore, zeolite may be ion-exchanged by one or more metal cations, and the appropriate metals include copper, iron, and cobalt, but are not limited thereto. The zeolite in the present disclosure is mixed with alumina sol and the alumina sol is included in approximately 5 to 50 weight % by weight of the zeolite, preferably, 10 to 30 weight %, and a mixture thereof will be dried and calcined to manufacture the reformed zeolite. The reformed zeolite of the present disclosure has an egg-shell structure in which zeolite acts as a core and alumina acts as a shell.

The reformed zeolite of the present disclosure is placed on the surface of the inner wall of the carrier or in the pores of the inner wall of the carrier, which forms NA-DOC, SCR, or SDPF catalyst articles. The term 'catalyst article' in the present disclosure may be interchangeably used with the term 'catalyst' or 'catalyst composite', and the term 'carrier' may be described as a substrate or support. A honeycombed substrate is exemplified as a carrier. The catalyst article of the present disclosure may further include conventional additives. As an example, the NOₓ adsorbing type diesel oxidation catalyst may further include platinum-group components, NOₓ storing material, such as barium, strontium, and magnesium, and the selective catalytic reduction catalyst or filter-type selective catalytic reduction catalyst may further include a component conjugate which is placed on a fire-resistant metal oxide carrier for realizing additional catalytic functions.

The catalyst articles of the present disclosure are mounted in an exhaust gas treatment system, and may further include the diesel oxidation catalyst and/or smoke filter at the upstream of the catalyst articles, and the downstream of the catalyst articles may be provided with an ammonia oxidation catalyst.

### <Zeolite Reformation>

As a first method, a zeolite reformation method using a resonant acoustic mixing (RAM) mixer and a ball milling process is proposed. First, an alumina sol solution (30 weight %) and BEA-zeolite (100 weight %) are mixed together, and distilled water (DI) is added to the mixture to produce a slurry having a solid content of 30%. The slurry is treated by using the RAM mixer for 2 minutes. Alumina balls are fed to and processed by wet milling for 24 hours, and then dried at 150°C and calcined at 600°C to complete the production of the alumina sol coated with reformed zeolite. A fresh zeolite is aged at 700°C to 1100°C in an L/R condition for 12 hours. The alumina sol solution refers to a solution of colloidal dispersion that has a diameter of 2 to 10 nanometers and is produced by injecting commonly acquired 5 to 50-micron alumina powder, such as SASOL, into water or acidic solution.

As a second method, a slurry process is proposed. An alumina sol solution (30 weight %) and BEA zeolite (100 weight %) are mixed together, and distilled water (DI) is added to the mixture, and the mixture is dispersed for 10 minutes, and then milled and adjusted acidity to produce a slurry having a solid content of 30%. The product is dried at 150°C and calcined at 600°C, so alumina sol coated with reformed zeolite is produced. A fresh zeolite is aged at 700°C to 1100°C in an L/R condition for 12 hours.

The first method and the second method proposed to produce reformed zeolites that actually have the same features.

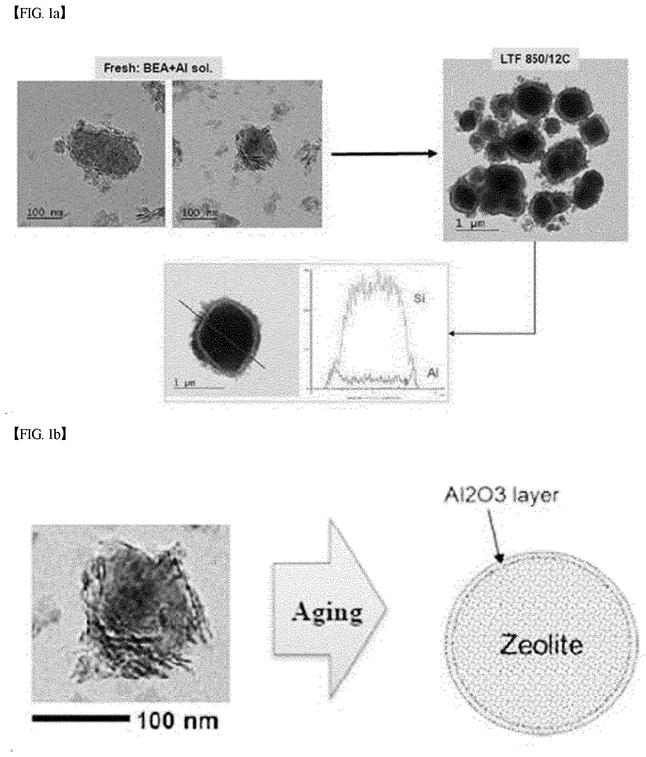

FIG. 1a shows a result of a transmission electron microscope (TEM) analysis of a fresh reformed zeolite and aged reformed zeolite, and FIG. 1b is a schematic view showing a change due to the aging. The fresh reformed zeolite has a size of approximately several hundred nm and an alumina component is concentrated around the zeolite. The reformed zeolite is subjected to aging in a lab tube furnace (LTF) at 850°C/12C (cyclic lean/rich), and the aged zeolite is aggregated and decreased in size to approximately 1um. Here, the alumina component is actually applied around the zeolite so that an egg-shell structure is formed. Specifically, in the fresh reformed zeolite, the alumina concentrated around the zeolite is calcined at 600°C, so that the alumina is expected as a gamma-alumina and the fresh reformed zeolite forms an egg-shell that is not dense. However, after aging, that is, sintering at 700 to 850°C, the result of BET shows that thermal stability becomes more excellent than the unaged fresh zeolite.

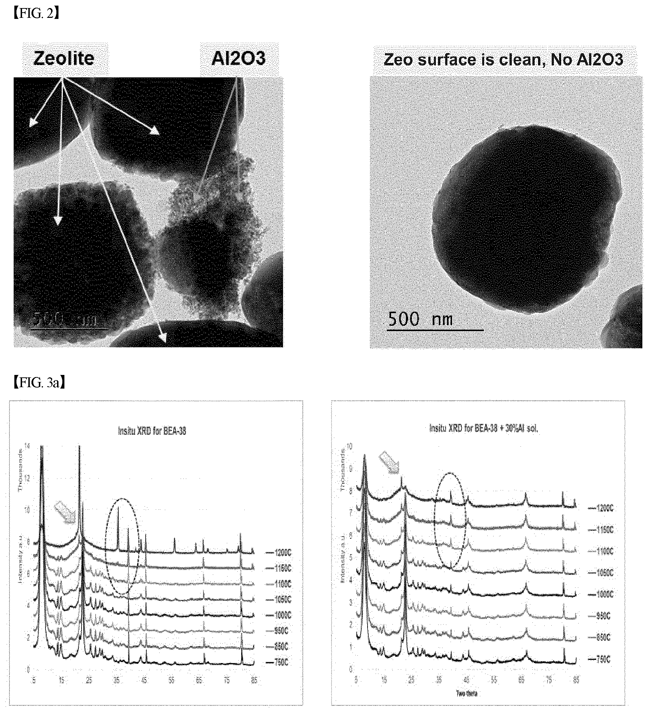

FIG. 2 shows a result of a TEM analysis after manufacturing a reformed zeolite by mixing gamma-alumina powder instead of alumina sol in the method of manufacturing reformed zeolite by using the resonant acoustic mixing (RAM) mixer and the ball milling process. The zeolite and alumina components are separated from each other, and no egg-shell structure is formed. Therefore, an alumina precursor to provide a physical barrier to the zeolite in the present disclosure is necessarily limited to an alumina sol, and preferably, when an aging process is added, the features of the zeolite are further improved.

FIG. 3a illustrates XRD spectrums of a conventional BEA zeolite and a reformed BEA zeolite according to the present disclosure at 750 to 1200°C. The conventional BEA zeolite shows a new peak at 1200°C or more, and reaches a structural collapse at that temperature. However, the reformed BEA zeolite of the p resent disclosure shows a constant peak at high-temperature, so that the structure thereof is structurally stable.

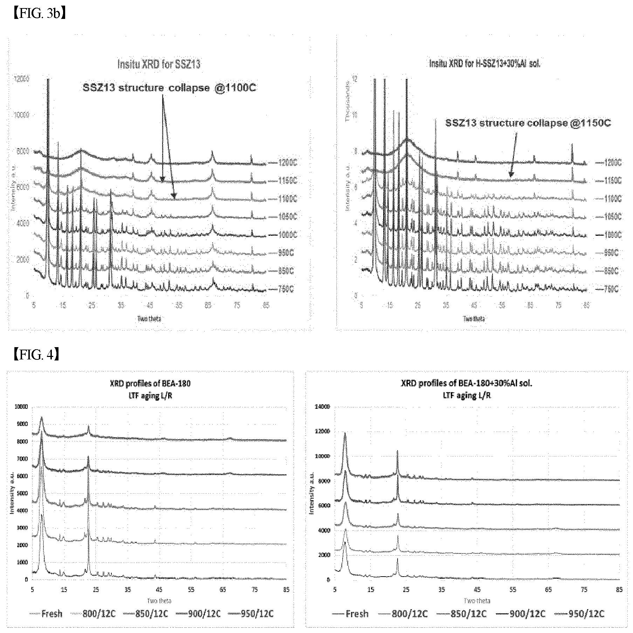

FIG. 3b illustrates XRD spectrums of a conventional SSZ13 zeolite and a reformed SSZ13 zeolite according to the present disclosure at 750 to 1200°C. The conventional SSZ13 zeolite shows a new peak at 1100°C or more, and reaches a structural collapse. However, the reformed SSZ13 zeolite of the present disclosure shows a new peak at 1150°C or more, and this means that the reformed SSZ13 zeolite is structurally stable by more than 50°C compared to the zeolite to which alumina sol is not applied.

FIG. 4 illustrates XRD spectrums of a conventional BEA zeolite and a reformed BEA zeolite in an LTF aging L/R process at 800 to 950°C. The conventional BEA zeolite becomes unstable when the temperature is increased. However, the reformed BEA zeolite of the present disclosure is more stable after 12h L/R cycle aging at 900°C.

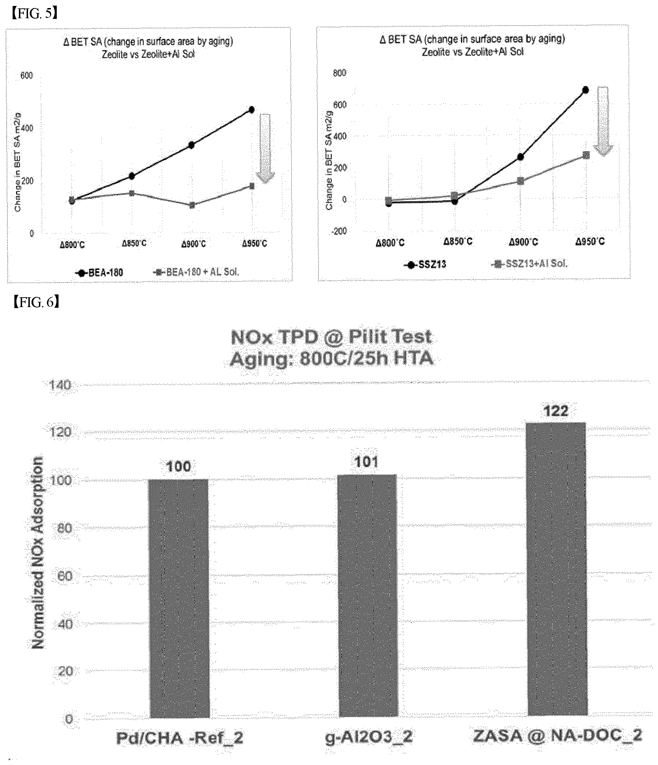

FIG. 5 shows graphs illustrating a change in a BET surface area of a conventional zeolite and a reformed zeolite of the present disclosure in an LTF aging L/R process at 800 to 950°C. The reformed zeolite of the present disclosure shows a structural stability since the change of the surface area is smaller than the conventional zeolite, and the BEA zeolite shows a more stable pattern than a SSZ13 zeolite.

In another embodiment of the present disclosure, the reformed zeolite may have a shape of a particle catalyst, and the catalyst article is provided by placing this particle shape on the carrier. The carrier or substrate may be arbitrary materials typically used in the manufacture of catalysts, and conventionally includes a ceramic or metal honeycombed structure. For example, a ceramic substrate may be formed of arbitrary fire-resistant materials. Specifically, the catalyst article or catalyst composite according to another embodiment of the present disclosure is manufactured by applying the reformed zeolite as a washcoat to the substrate. The washcoat of the reformed zeolite may be manufactured by using a binder. According to one or more embodiments of the present disclosure, an adequate precursor such as zirconium precursor, for example, ZrO₂ which is induced from zirconyl nitrate, is used as a binder. According to another embodiment, the reformed zeolite catalyst includes a precious metal component, that is, a platinum-group metal component. For example, to prevent an ammonia slip phenomenon, the platinum-group component as an ammonia oxidation catalyst is typically included in the reformed zeolite catalyst. An adequate platinum metal component includes platinum, palladium, rhodium, and a mixture thereof. A number of components of the catalyst materials (for example, the reformed zeolite and precious metal component) may be applied as a fire-resistant carrier, that is, a washcoat mixture of two or more components, or as a separate washcoat component. The catalyst article may be formed by using a known method. The coating method is well known, and carrying may be performed on the inner wall surface of the carrier, or on some of the surface, or on the rest of the inner wall, or in the entire inside of the wall. The reformed zeolite catalyst article according to the present disclosure may be provided in an exhaust gas treatment system such as a system that may be seen in gasoline and diesel vehicles. In these exhaust gas treatment systems, the reformed zeolite catalyst articles are generally provided for accomplishing fluid communication with other gas treatment articles at the upstream or downstream of the catalyst articles, for example, fluid communication with diesel oxidation catalysts, smoke filters and/or ammonia oxidation catalyst article.

FIG. 6 is a graph showing NOₓ adsorption rates of NA-DOC catalyst articles including SSZ13 zeolite control group (Pd/CHA), gamma-alumina (g-Al₂O₃) control group, and reformed zeolite (ZASA @ NA-DOC) containing 30 weight % of alumina sol in the control group zeolite, when the NOₓ adsorption rates were measured under the condition with 850°C/25h hydro thermal aging (HTA), adsorption of NOₓ = 400 ppm for 10 minutes at 100°C, and desorption at 100 to 700°C. The NA-DOC of FIG. 6 includes CeO₂-Al₂O₃ which contains platinum-group, as well as the SSZ13 zeolite, gamma alumina, and zeolite reformed by alumina sol. Referring to FIG. 6, it is noted that the NOₓ adsorption rate of the NA-DOC containing the reformed zeolite of the present disclosure was improved by approximately 20%, compared to the NA-DOC containing the SSZ13 zeolite control group (Pd/CHA) and NA-DOC containing gamma-alumina (g-Al₂O₃) control group.

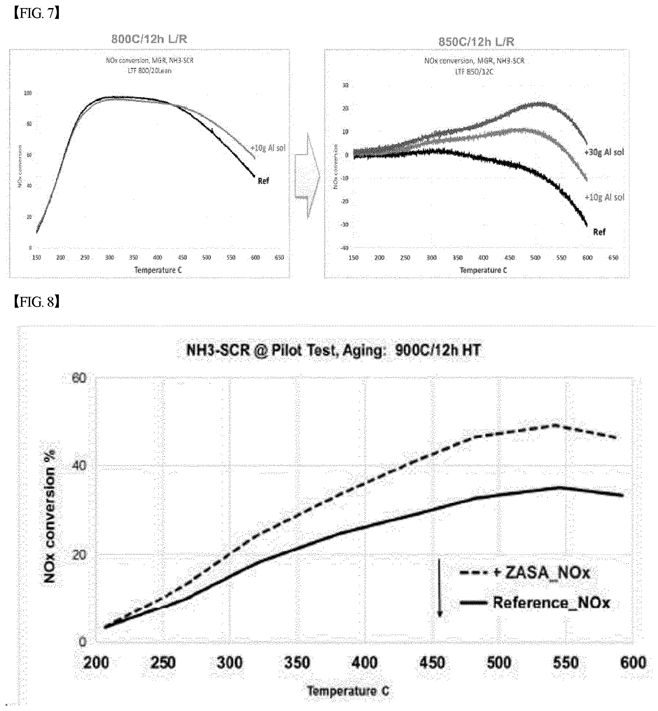

FIG. 7 is a graph showing an ammonia-SCR performance efficiency after 850°C/25h HTA aging and 900°C/12h HTA aging for catalyst articles including SSZ13 zeolite control group (Ref-Cu/CHA), gamma-alumina (g-Al₂O₃) control group, and the modified zeolite (ZASA) containing 30 weight % of alumina sol in the control group. In FIG. 7, the conditions for the ammonia-SCR reaction was 400 ppm, NH3/NOₓ=1, and SV=60,000 hr-1, and it is noted that the NOₓ conversion rate of the SCR catalyst article produced by the present disclosure was excellent than the control articles, and the conversion rate was significantly improved especially at high-temperature.

FIG. 8 is a graph showing ammonia-SCR performance efficiency after 900°C/12h HTA aging for catalyst articles in which catalysts including SSZ13 zeolite control group (Ref-NOₓ) and reformed zeolite (ZASA) containing 30 weight % of alumina sol in the control group zeolite are coated on DPF. The used DPF is a cordierite-based filter and the coating quantity is 250g/L. From FIG. 8, it is noted that the NOₓ conversion rate by ZASA was remarkable in response to an increase in the temperature when compared to the control group.

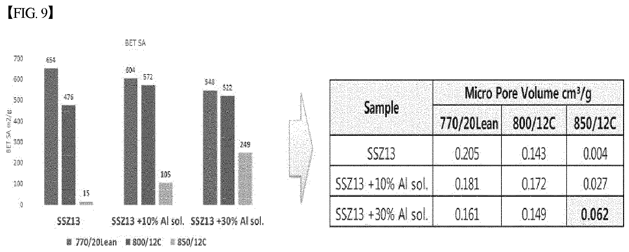

The catalyst article according to the present disclosure has improved catalyst efficiency at high-temperature. This improvement may be due to the improved heat resistance of the reformed zeolite. This conclusion is further supported by FIG. 9. FIG. 9 is a graph and table showing changes in the BEA surface area of SSZ13 zeolite control group containing 3% Cu, reformed zeolite containing 10 weight % alumina sol in the control group, and reformed zeolite containing 30 weight % alumina sol in the control group, under the condition of 770°C/20Lean, 800°C/12C, and 850°C/12C. The graph and table show that the reformed zeolite has improved structural stability.

## Claims

1. A nitrogen oxide adsorbing type diesel oxidation catalyst article comprising zeolite placed on a carrier, wherein the zeolite is coated with alumina sol.

2. A selective catalytic reduction catalyst article comprising zeolite placed on a carrier, wherein the zeolite is coated with alumina sol.

3. A filter-type selective catalytic reduction catalyst article comprising a zeolite placed on a carrier, wherein the zeolite is coated with alumina sol.

4. Zeolite coated with alumina sol used in a nitrogen oxide adsorbing type three-way catalyst article, a selective catalytic reduction catalyst article, or a filter-type selective catalytic reduction catalyst article.

5. The catalyst article according to any one of claims 1 to 3, wherein the zeolite is H-beta zeolite or CHA zeolite.

6. An exhaust gas treatment system comprising the catalyst article according to any one of claims 1 to 3.
